(19) Europäisches Patentamt

European Patent Office

Office européen des brevets

(11) Veröffentlichungsnummer: **0 210 418 B1**

(12) **EUROPÄISCHE PATENTSCHRIFT**

(45) Veröffentlichungstag der Patentschrift: **11.03.92**

(21) Anmeldenummer: **86108432.5**

(22) Anmeldetag: **20.06.86**

(51) Int. Cl.⁵: **C07F 7/16**

(54) **Verfahren zur Aufarbeitung von Hydrolyserückständen aus der Methylchlorsilansynthese.**

(30) Priorität: **02.07.85 DE 3523543**

(43) Veröffentlichungstag der Anmeldung:
**04.02.87 Patentblatt 87/06**

(45) Bekanntmachung des Hinweises auf die
Patenterteilung:
**11.03.92 Patentblatt 92/11**

(84) Benannte Vertragsstaaten:
**DE FR GB**

(56) Entgegenhaltungen:
**DE-A- 2 362 494**
**DE-A- 3 131 732**

(73) Patentinhaber: **BAYER AG**

**W-5090 Leverkusen 1 Bayerwerk(DE)**

(72) Erfinder: **Feldner, Kurt, Dr.**
**Hammerweg 28**
**W-5090 Leverkusen 1(DE)**
Erfinder: **Horak, Otto**
**Silesiusstrasse 76**
**W-5000 Köln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Aufarbeitung von Hydrolyserückständen, die bei der Hydrolyse von feststoffhaltigen Polysilanschlämmen aus der Organochlorsilansynthese nach dem Direktverfahren anfallen. Insbesondere bezieht sich die Erfindung auf die Aufarbeitung von Hydrolyserückständen aus der Methylchlorsilansynthese.

Organochlorsilane und insbesondere die Methylchlorsilane dienen als Ausgangsmaterialien für die Herstellung von Siliconen, die in weiten Bereichen Anwendung finden, so z.B. als Kautschuke, Fugendichtmassen, Öle, Bautenschutzmittel usw. Besonders erwünscht bei der Herstellung der Methylchlorsilane ist das Dimethyldichlorsilan, welches in hoher Ausbeute erhalten wird, wenn die Direktreaktion von Silicium mit Methylchlorid durch Kupfer bzw. Kupferverbindungen katalysiert wird. Das Verfahren ist grundlegend in der US-PS 2 380 995 beschrieben. Die Darstellung von Methylchlorsilanen nach diesem Verfahren wird weltweit im industriellen Maßstab betrieben, wobei man die Reaktion üblicherweise in kontinuierlich betriebenen Fließbettreaktoren durchführt.

Es ist bekannt, daß bei der Direktsynthese neben Dimethyldichlorsilan noch weitere Silane der allgemeinen Formel $Me_xSiCl_{4-x}$, x = 0 bis 4, $Me_xHSiCl_{3-x}$, x = 0 bis 2, (Me = $CH_3$-) sowie dimere Silane $Me_xSi_2Cl_{6-x}$, x = 2 bis 6, Siloxane und Silmethylene entstehen.

Bei der Durchführung des Direktverfahrens in Fließbettreaktoren werden zusammen mit dem Reaktionsprodukt, der Rohsilanmischung, und unumgesetztem Methylchlorid ständig auch die Feinstanteile von Silicium, Katalysator und umgesetzter Kontaktmasse ausgetragen. Diese Staubanteile werden häufig zusammen mit den höchstsiedenden Reaktionsprodukten ($Kp_{760}$ > 160°C) in einem sogenannten Schlammkessel mit nachgeschaltetem Waschturm gesammelt. Die Temperatur des unter dem üblichen Überdruck von 1,5 - 10 bar stehenden Kessels wird im allgemeinen so eingestellt, daß das Gemisch aus Feststoff und kondensierten Anteilen genügend dünnflüssig gehalten wird, um den Austrag aus diesem Kessel zu ermöglichen.

Gemäß der deutschen Patentschrift 2 362 494 kann der Kesselinhalt in einen bevorzugt unter Normaldruck stehenden Rührbehälter entspannt und die noch destillierbaren Anteile aus dem Gemisch durch Erhitzen ausgetrieben werden. Der Inhalt dieses Kessels wird dann in der Regel einer Hydrolyse zugeführt.

Die Hydrolyse selbst kann wie in DE-PS 2 362 494 beschrieben in einem Fallrohr durchgeführt werden. Der Nachteil ist, daß durch die kurzen Kontaktzeiten die Hydrolyse oft nur unvollständig verläuft und große Mengen Wasser gebraucht werden.

Die DE-OS 3 005 743 beschreibt ein Hydrolyseverfahren, bei dem die unangenehme Eigenschaft des Klebens der Hydrolysate durch Zusatz von Mineralöl verhindert wird. Da aber die Hydrolysate als wertlos betrachtet und deponiert werden, ist die zusätzliche organische Belastung nachteilig.

Aus der EP 0 089 784 geht hervor, daß das Problem des Klebens auch durch die Einhaltung eines Mindestchlorgehaltes bewältigt werden kann, was aber eine technisch schwer zu lösende Aufgabe ist.

Bei all den erwähnten Verfahren entsteht eine salzsaure Suspension, bei der das mehr oder weniger feste Hydrolysat als wertlos gilt und deponiert werden muß. Die Hydrolysate sind allerdings nicht problemlos, denn sie enthalten meist 2 - 10 % überwiegend metallisches Kupfer, welches aus dem deponierten Hydrolysat teilweise eluiert werden kann und somit eine Gefahr für das Grundwasser darstellen kann. Darüber hinaus sind die meisten erhaltenen Hydrolysate oxidationsempfindlich, ja sie neigen in manchen Fällen sogar zur Selbstentzündung, was einer ordnungsgemäßen Deponierung entgegensteht.

Durch Hydrolyse der Si-Cl-Funktionen entstehen bis zu 100 g/l HCl, die im Hydrolysewasser gelöst sind. Außerdem können die nicht weiter behandelten Hydrolysesuspensionen Wasserstoff entwickeln, was unerwünscht ist und sogar gefährlich sein kann.

Die DE-OS 3131732 betrifft ein Verfahren zur Aufarbeitung von bei der Rochow-Synthese anfallenden Gemischen aus siliciumhaltigen Feststoffen und polysilanhaltigen Flüssigkeiten durch thermische Behandlung, wobei die Gemische in einem bewegten Reaktor unter inerten Bedingungen auf Temperaturen von etwa 280 bis 1000°C erhitzt werden, wobei Feststoffgemisch und Abgas im Gegenstrom geführt werden und die anfallende Schlacke gegebenenfalls einer anschließenden oxidativen Nachbehandlung unterworfen wird, und wobei gegebenenfalls vor, während und/oder nach der Nachbehandlung alkalische Zusatzstoffe zugesetzt werden.

Aus der deutschen Patentschrift 901 889 ist bekannt, daß sich bei der Organochlorsilanherstellung aus dem Reaktor anfallende erschöpfte Silicium- und Kupfer-haltige Kontaktmassen dadurch aufarbeiten lassen, daß sie in Wasser oder verdünnter Salzsäure mit gasförmigem Chlor behandelt werden. Das unveränderte elementare Silicium wird nach der Chlorierung von der kupferhaltigen Lösung abgetrennt und das Kupfer-II-chlorid durch Reduktionsmittel in Kupfer-I-chlorid überführt, auskristallisiert und als Katalysator bei der Silansynthese wieder verwendet.

Dieses Verfahren ist aus zwei Gründen für die

2

hier vorliegenden Hydrolysate ungeeignet:
Bedingt durch den Polysilangehalt im Schlammkesselaustrag enthält die Hydrolysesuspension erhebliche Anteile chlorierbarer Verbindungen, was zu Abwasserproblemen führen kann.

Zum anderen läßt sich durch Auskristallisieren von Kupfer-I-chlorid Kupfer nicht quantitativ abtrennen, darüber hinaus bleiben natürlich auch noch andere Metalle, die nicht als schwerlösliches Chlorid fällbar sind, in Lösung.

Die vorliegende Erfindung befaßt sich nun mit einer möglichst effektiven Hydrolyse und der weiteren Aufarbeitung derartiger Hydrolysate, wobei ein ordnungsgemäß deponierbarer fester Rückstand entstehen, das Kupfer wiedergewonnen werden und ein schwermetallfreies Abwasser abgegeben werden soll.

Gegenstand der vorliegenden Erfindung ist nun ein Verfahren zur Aufarbeitung von bei der Organochlorsilansynthese anfallenden hochsiedenden und feststoffhaltigen Rückständen, welches dadurch gekennzeichnet ist,daß

a) die Rückstände bei 40-100°C in einem Rührwerksbehälter, in dem mittels eines schnell laufenden Scheibenrührers eine Trombe erzeugt wird, hydrolysiert werden,

b) anschließend mit einem elementeren Sauerstoff enthaltenden Gas oxidiert wird,

c) die kupferhaltigen Lösungen vom Feststoff abgetrennt werden,

d) die kupferhaltigen Lösungen, gegebenenfalls unter Zusatz von Reduktionsmittel, mit Erdalkali- und/oder Alkalihydroxid versetzt werden und

e) die ausgefällten Hydroxide bzw. Oxide abgetrennt werden.

Die Durchführung der Hydrolyse besteht darin, daß die Hydrolyse mit Wasser oder einer stark verdünnten Salzsäure, bis ca, 5 Gew.-%, in einem Rührwerksbehälter mit einem schnell laufenden Scheibenrührer ausgeführt wird, wobei dieser Behälter nicht mit Strombrechern ausgerüstet ist, so daß sich eine Trombe ausbilden kann, in die das zu hydrolysierende Material eingetragen wird, Die bevorzugte Temperatur liegt dabei zwischen 60 und 90°C. Überraschenderweise erhält man so feinteilige, feste Hydrolysate, in denen > 90 % der Feststoffteilchen Durchmesser > 5 mm aufweisen und die nicht kleben. Die erhaltenen Hydrolysesuspensionen weisen normalerweise, selbstverständlich auch in Abhängigkeit der eingesetzten Mengen, Feststoffgehalte von 5 - 40 Gew.-%, berechnet als feuchter Filterkuchen, auf.

Für die erfindungsgemäße Weiterverarbeitung sind Feststoffgehalte, berechnet wie oben, von 20 ± 5 Gew.-% optimal; diese Mengenangabe soll allerdings nicht einschränkend für das vorliegende Verfahren verstanden werden.

Die Oxidation der Hydrolysesuspension gemäß der vorliegenden Erfindung erfolgt mit elementaren Sauerstoff enthaltenden Gasen, bevorzugt mit technisch reinem Sauerstoff, unter gegenüber Atmosphärendruck erhöhtem Druck.

Üblicherweise wird die erfindungsgemäße Oxidation bei $O_2$-Drucken von 1 - 20 bar, bevorzugtermaßen bei 4 - 6 bar durchgeführt. Der bei der Oxidation verbrauchte Sauerstoff wird ständig ergänzt, um den gewünschten Druck aufrechtzuerhalten. Die Temperatur kann variieren zwischen 50 und 120°C, als optimal hat sich eine Temperatur von 80 ± 10°C herausgestellt. Die Verweilzeit bei der Oxidation beträgt in der Regel 3 h. Kürzere Verweilzeiten, niedrigere Drucke oder Temperaturen sind möglich, es besteht aber die Gefahr, daß der getrocknete Rückstand dann nicht mehr thermisch inert ist. Nach größeren Verweilzeiten hin gibt es keine Grenze, allerdings werden Verweilzeiten > 4 h unwirtschaftlich und verursachen unnötig große Reaktionsbehälter. Das erfindungsgemäße Verfahren kann sowohl diskontinuierlich als auch kontinuierlich durchgeführt werden.

Im Gegensatz zur Verwendung anderer Oxidationsmittel, wie z.B. NaOCl, Chlor oder Wasserstoffperoxid, liegen die Gehalte an chlorierten Kohlenwasserstoffen im Abwasser nach Abtrennung des Feststoffes deutlich niedriger. Der Oxidation mit anderen Oxidationsmitteln hat die Sauerstoffdruckoxidation auch den Vorteil voraus, daß keine Dosierprobleme vorhanden sind, da ein $O_2$-Überschuß vollkommen unkritisch ist und ein Unterschuß gemäß dem vorliegenden Verfahren unmöglich ist. Bei der Sauerstoffoxidation wird weder die Abwassermenge noch die Salzfracht zusätzlich erhöht.

Nach beendeter Oxidation wird der $O_2$-Druck entspannt und Feststoff und Flüssigkeit voneinander getrennt.

Da die saure Hydrolyse der Si-Si-Bindungen, die unter $H_2$- Bildung abläuft, nicht vollständig gegenüber der Oxidation unterdrückt werden kann, kommt es zu einer geringen $H_2$-Entwicklung. Um Knallgasreaktionen zu vermeiden, wird ständig eine Menge des Gasvolumens im Reaktionsbehälter durch Spülen mit $O_2$ ausgetauscht. Auf diese Weise wird die Zusammensetzung der Gasphase problemlos kontrolliert.

In der bevorzugten Ausführungsform wird die Abtrennung des Feststoffes in der Wärme vorgenommen und der Feststoff durch eine Wäsche von anhaftender kupferhaltiger Lösung befreit und abgekühlt.

Das Abtrennen der Feststoffe erfolgt bevorzugt über eine Filtereinrichtung, z.B. ein Bandfilter. Man erhält einen deponierfähigen, stichfesten, nicht gasenden, keine eluierbaren Schwermertalle enthaltenden, thermisch inerten Filterkuchen. Unter thermisch inert soll ein Material verstanden werden, das an der Luft eine Temperatur von ca. 80°C zwei Stunden lang ohne Selbstentzündung übersteht. Hierzu werden 5 g der Substanz in den offenen Untersatz (Durchmesser 55 mm) einer Petrischale gefüllt und in einem thermostatisierten und gerührten Ölbad bei 80°C gehalten.

Der Feststoffgehalt des Filterkuchens liegt etwa bei 50 Gew.-% (als Trockensubstanz berechnet), der Kupfergehalt < 0,5 Gew.-%.

Die Hauptmenge des im Schlammkesselaustrag enthaltenden Kupfers, (etwa 90 bis 95 %) befinden sich nun im Filtrat, das neben 10 bis 80 g/l HCl etwa 5 bis 15 g/l Cu und jeweils 0,1 bis 1,0 g/l Fe, Zn, Al und $SiO_2$ enthält.

Aus dem oxidierten, abgetrennten und gewaschenen Feststoff läßt sich mit weiterem Wasser kein Kupfer mehr eluieren, er entwickelt keinen Wasserstoff mehr und ist nach Trocknung noch bei 80°C inert gegenüber Luft, woraus eine problemlose Deponierbarkeit resultiert.

Das Verfahren zur Aufarbeitung der Hydrolysate gemäß der vorliegenden Erfindung besteht nun darin, daß die salzsauren Hydrolysesuspensionen gezielt oxidiert werden und daß nach der Abtrennung der Feststoffe die Kupfer-, Eisen-, Aluminium- und Zink-haltigen Lösungen, gegebenenfalls unter Zusatz von Reduktionsmittel, mit Erdalkali- und/oder Alkalihydroxid versetzt werden. Auf diese Art und Weise erhält man nach Abtrennung der ausgefällten Hydroxide bzw. Oxide ein Abwasser, welches a) fast neutral und b) frei von allen als Hydroxide fällbaren Schwermetallen ist.

Die bevorzugte Form der Reinigung des Filtrates von den gelösten Metallsalzen erfolgt durch reduktive Fällung mit $SO_2$ und NaOH, wobei in einer ersten Stufe reduziert wird und zwar bei einem pH-Wert von etwa 6 und in einer zweiten Stufe bei pH = 9 die Ausfällung zu Ende geführt wird. Die reduktive Fällung wird bevorzugt in der Wärme bei etwa 50 - 100°C durchgeführt. Es ist daher zweckmäßig, bei der Filtration der oxidierten Hydrolysesuspension das heiße kuperhaltige Filtrat direkt der Kupferrückgewinnung zuzuführen und das kältere, weniger stark verunreinigte Waschwasser in die Hydrolyse zurückzuführen.

Man erhält ein gut filtrierbares Kupfer(I)oxid, das nach dem Trocknen einen Gehalt an Kupfer von 40 - 60 % sowie mitgefällte Oxide und Hydroxide von Eisen, Zink, Aluminium und Silicium in Mengen von jeweils 1 - 5 % aufweist.

Das Abwasser ist auf diese Weise von Schwermetallen befreit und kann zur weiteren Reinigung gegebenenfalls einer biologischen Kläranlage zugeführt werden.

Fig. 1

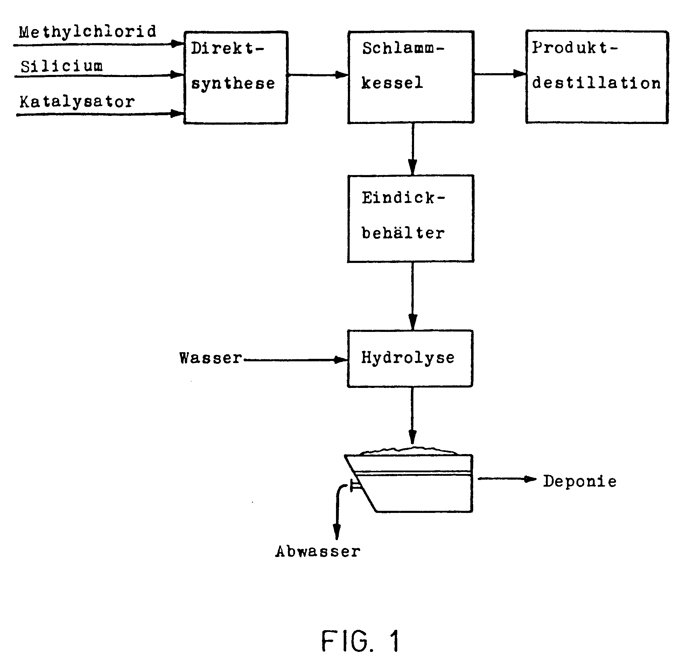

In Fig. 1 ist der bislang übliche Verfahrensweg dargestellt. Aus den "Direktsynthesereaktoren" (12) treten gasförmige Reaktionsprodukte, unumgesetztes Methylchlorid und Feinanteile über (13) in das Schlammgefäß (14) ein, in dem die nichtflüchtigen Bestandteile aufgefangen werden und die flüchtigen Bestandteile verlassen das Gefäß über (15), um in die Produktdestillation (16) zu gelangen. Mittels eines Taktventils wird der nichtflüchtige Inhalt von (14) entspannt und über (17) in einen Eindicker (18) eingeleitet um bei Atmosphärendruck flüchtige Verbindungen zu gewinnen.

Aus dem Behälter (18) wird der Schlamm mittels Wasser in eine Abflußleitung (20) gesaugt und dabei hydrolysiert. Die Suspension aus (20) wird normalerweise in einem Behälter (22) aufgefangen und deponiert.

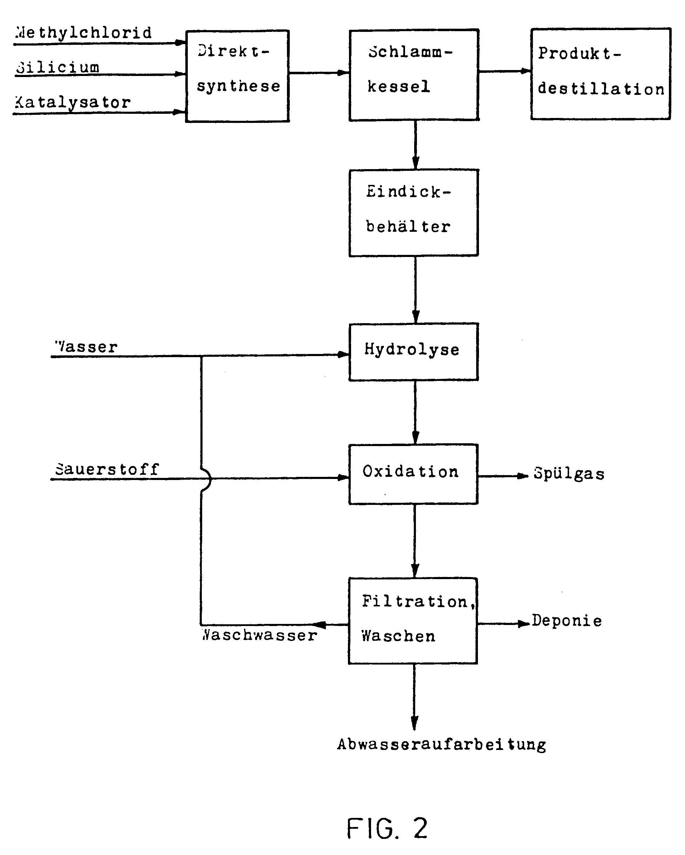

Das erfindungsgemäße Verfahren zeigt Fig. 2.

Fig. 2

Das Verfahren zum Sammeln des Schlammes wird in genau der gleichen Weise wie in Fig. 1 (Schritte 12 bis 19) durchgeführt.

Danach unterscheidet sich das Verfahren dadurch, daß die Hydrolyse in einem mit einem Rührer ausgerüsteten Reaktionsgefäß (32) mit Wasser oder verdünnter HCl durchgeführt wird.

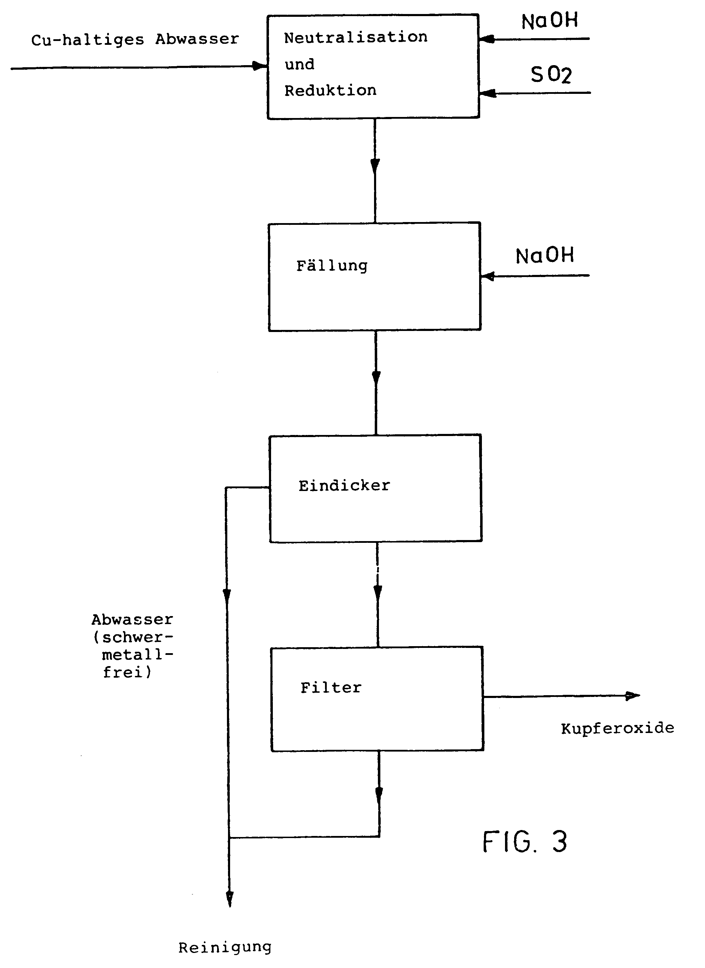

Über einen freien Überlauf gelangt die Hydrolysesuspension über (33) in den Oxidationsreaktor (34). Nach beendeter Oxidation verläßt die Suspension über (35) das Gefäß (34) um mittels einer geeigneten Filtriereinrichtung (36) filtriert zu werden. Nach der Trennung der Feststoffe von der Flüssigkeit werden die gewaschenen Feststoffe deponiert, die kupferhaltige HCl-Lösung wird zur Anlage zur Aufarbeitung des Abwassers über (38) (Fig. 3) geführt und das Waschwasser kann zur Hydrolyse über (37) wiederverwendet werden.

Fig. 3

Im ersten Schritt wird die kupferhaltige Lösung im Reduktionsbehälter (39) mit NaOH auf pH 6 eingestellt und gleichzeitig mit $SO_2$ reduziert. Über Leitung (40) gelangt die Lösung in den Fällbehälter (41), wo mit NaOH Kupfer(I)oxid ausgefällt wird.

Die resultierende Suspension wird über (42) einem Eindicker (43) zugeführt, von dessen Überlauf feststofffreies Abwasser über Leitung (46) der weiteren Klärung zugeführt wird. Die eingedickte Suspension wird über Leitung (44) einem geeigneten Filter (45) zugeleitet und filtriert.

Im folgenden soll die Erfindung an Beispielen noch näher erläutert werden.

1. Aus dem unter Normaldruck stehenden Rührwerksbehälter zur Rückgewinnung flüchtiger Silane wurden stündlich etwa 300 - 400 kg der nicht flüchtigen Bestandteile über ein Taktventil der Hydrolyse zugeführt. Der Hydrolysebehälter war in Form eines Rührwerkskessels mit schnell laufendem Scheibenrührer ohne Strombrecher ausgeführt. Gleichzeitig mit den zu hydrolysierenden Silanrückständen wurde der Kessel mit so vorgewärmten Wasser beaufschlagt, daß sich eine Hydrolysetemperatur von 70 - 80°C einstellte. Die mittlere Verweilzeit lag bei etwa 0,5 h und die Hydrolysesuspension verließ den Kessel im freien Überlauf.

In der Regel erhielt man so ein festes Hydrolysat in krümeliger Form. Folgende Kenngrößen waren für solche Hydrolysate typisch:

Feststoffgehalt:
5-20 Gew.-% Trockensubstanz
Kornverteilung des Feststoffes:
95 % < 5 mm, 50 % < 1 mm,
10 % < 0,1 mm
Cu-Gehalt im trockenen Feststoff:
4 - 9 Gew.-%
Hydrolysewasser:
20 - 100 g/l HCl
50 - 200 ppm $Cu^{2+}$
Oxidationsempfindlichkeit des trockenen Hydrolysates:
Selbstentzündung bei 80°C nach 0 - 5 min.

2. 12 l Hydrolysesuspension aus der Hydrolyseapparatur des Beispiels 1 wurden ohne weitere Vorbehandlung oxidiert. Als Reaktionsgefäß diente ein emaillierter Autoklav mit 16 l Volumen, ausgestattet mit einem Begasungsrührer und Temperaturmessung. Der Autoklav wurde mit 6 bar $O_2$ aus einer Stahlbombe beaufschlagt. Ständig wurden etwa 30 1/h $O_2$ durch den Autoklaven gespült, um die Zusammensetzung der Gasphase überwachen zu können und die Konzentration von $H_2$ < 2 Vol.-% zu halten. Die Starttemperatur bei der Oxidation lag bei 51°C. Durch die einsetzende exotherme Oxidation stieg die Temperatur auf 69°C an. Im Verlauf der weiteren drei Stunden Oxidationszeit wurde mittels einer Dampfheizung die Temperatur bei 80°C gehalten.

Ausgangssuspension
:
Feststoffgehalt d. Suspension (trocken):
14,8 %
Cu-Gehalt des Feststoffes (trocken):
5,6 %
Oxidationsempfindlichkeit des trockenen Hydrolysates bei 80°C an der Luft:
Selbstentzündung nach weniger als 1 min
HCl-Gehalt des Wassers:
54,5 g/l
nach der Oxidation:
Cu-Gehalt des trockenen Feststoffes:
0,28 %
Oxidationsempfindlichkeit des trockenen Feststoffs bei 80°C an der Luft:

inert
HCl-Gehalt des Wassers:
47,8 g/l
$Cu^{2+}$-Gehalt des Wassers:
8,0 g/l
$O_2$-Verbrauch:
10 l/l
Suspension

3. In einem 100 l-Glas-Rührbehälter wurden 70 l der aus mehreren Ansätzen gemäß Beispiel 2 erhaltenen $CuCl_2$-haltigen Lösung mit 7,4 g Cu/l auf 70°C aufgeheizt und mit ca. 17 l 15 %iger Natronlauge auf pH 6 eingestellt. Dann wurden unter Rühren (150 Upm) 105 l gasförmiges $SO_2$ innerhalb von 30 Minuten eingeleitet (ca. 3.5 l $SO_2$/min); während dieser Zeit wurde durch langsame Zugabe von 15 %iger Natronlauge die Mischung weiterhin ständig auf pH 6 gehalten. Nach Beendigung der $SO_2$-Einleitung wurde die Reaktionsmischung mit 15 %iger NaOH innerhalb von ca. 15 Minuten auf pH 8,5 - 9 eingestellt und anschließend die Suspension noch eine Stunde weitergerührt. Im Anschluß an die Fällung wurde die Mischung auf einer Kammer-Filterpresse mit einem Überdruck von bis zu maximal 6 bar filtriert, bis die Entwässerung des Filterkuchens abgeschlossen war, danach wurde der Filterkuchen gewaschen. Der Rückstand wurde bei 120°C im Vakuum-Trockenschrank bis zur Gewichtskonstanz getrocknet; der trockene Rückstand war hellorange gefärbt und enthielt 52,4 % Kupfer. Der Glühverlust (1h 400°C) beträgt ca. 8-10 %. Das Filtrat des Filterkuchens war schwermetallfrei (<50 mg/l).

**Patentansprüche**

1. Verfahren zur Aufarbeitung von bei der Organochlorsilansynthese anfallenden hochsiedenden und feststoffhaltigen Rückständen, dadurch gekennzeichnet,
daß

a) die Rückstände bei 40-100°C in einem Rührwerksbehälter, in dem mittels eines schnell laufenden Scheibenrührers eine Trombe erzeugt wird, hydrolysiert werden,

b) anschließend mit einem elementeren Sauerstoff enthaltenden Gas oxidiert wird,

c) die kupferhaltigen Lösungen vom Feststoff abgetrennt werden,

d) die kupferhaltigen Lösungen, gegebenenfalls unter Zusatz von Reduktionsmitttel, mit Erdalkali- und/oder Alkalihydroxid versetzt werden und

e) die ausgefällten Hydroxide bzw. Oxide abgetrennt werden.

2. Verfahren gemäß Anspruch 1, dadurch gekennzeichnet, daß die Oxidation mit technisch reinem Sauerstoffbei erhöhtem Druck zwischen 1 und 20 bar, bei Temperaturen zwischen 40 und 120°C und mit einer Verweilzeit von 1 - 5 Stunden durchgeführt wird.

**Claims**

1. A process for the preparation of residues which have a high boiling point and contain solids and which are produced during organochlorosilane synthesis, characterised in that

    a) the residues are hydrolyzed at 40-100°C in a mixing vessel in which a funnel is formed by a disk agitator operating at a high speed,

    b) whereupon oxidation is carried out using a gas containing elemental oxygen,

    c) the solutions containing copper are separated from the solid material,

    d) the solutions containing copper, optionally with the addition of a reducing agent, are mixed with alkaline-earth hydroxide and/or alkali hydroxide,

    e) the precipitated hydroxides and oxides are separated.

2. A process as claimed in Claim 1, characterised in that the oxidation is carried out using technically pure oxygen at an increased pressure of between 1 and 20 bar, at temperatures of between 40 and 120°C and with a dwell time of 1-5 hours.

**Revendications**

1. Procédé pour le traitement des résidus à haut point d'ébullition et contenant des matières solides obtenus à la synthèse des organochlorosilanes, caractérisé en ce que

    a) on hydrolyse les résidus à une température de 40 à 100°C dans un récipient équipé d'un dispositif d'agitation dans lequel on provoque la formation d'un tourbillon à l'aide d'un agitateur à disque tournant rapidement,

    b) on oxyde ensuite par un gaz contenant de l'oxygène élémentaire,

    c) on sépare les solutions cuivreuses des matières solides,

    d) on ajoute aux solutions cuivreuses, le cas échéant avec adjonction d'agents réducteurs, un hydroxyde alcalino-terreux et/ou alcalin et

    e) on sépare les hydroxydes et oxydes qui ont précipité.

2. Procédé selon la revendication 1, caractérisé en ce que l'oxydation est réalisée à l'aide d'oxygène industriel pur à une pression manométrique de 1 à 20 bars, à des températures de 40 à 120°C, et dans une durée de 1 à 5 h.

```
Methylchlorid ──────▶ ┌──────────┐      ┌──────────┐      ┌──────────────┐
                      │ Direkt-  │      │ Schlamm- │      │ Produkt-     │
Silicium ───────────▶ │          │─────▶│          │─────▶│              │
                      │ synthese │      │ kessel   │      │ destillation │
Katalysator ────────▶ └──────────┘      └──────────┘      └──────────────┘
                                              │
                                              ▼
                                        ┌──────────┐
                                        │ Eindick- │
                                        │ behälter │
                                        └──────────┘
                                              │
                                              ▼
                 Wasser ─────────────▶ ┌──────────┐
                                       │ Hydrolyse│
                                       └──────────┘
                                              │
                                              ▼
```

Deponie

Abwasser

FIG. 1

FIG. 2

Cu-haltiges Abwasser →

| Neutralisation und Reduktion | ← NaOH |
| ← SO2 |

↓

| Fällung | ← NaOH |

↓

| Eindicker |

Abwasser
(schwermetallfrei)

| Filter | → Kupferoxide |

FIG. 3

Reinigung